# EUROPEAN PATENT APPLICATION

(11) **EP 2 119 751 A1**
(43) Date of publication of application: **18.11.2009**
(21) Application number: 08009016.0
(22) Date of filing: 15.05.2008
(51) Int. Cl.: C09J 151/06, C09J 123/18, C09J 153/02, C09J 155/02, C09J 123/08, C08L 53/02, C08L 55/02

(54) **One-pack type adhesive precoating composition**

(71) Applicant: SUNSTAR GIKEN KABUSHIKI KAISHA, Takatsuki-shi, Osaka 569-1134 (JP); Kanto Auto Works, Ltd., Yokosuka-city, Kanagawa 237-8585 (JP)
(72) Inventor: Okamoto, Hirokazu, Takatsuki-shi Osaka 569-1134 (JP); Uno, Atsushi, Takatsuki-shi Osaka 569-1134 (JP); Shibata, Yoshimi, Takatsuki-shi Osaka 569-1134 (JP); Tsuboi, Hideaki, Yokosuka-shi Kanagawa 237-8585 (JP); Matsuda, Katsuhiro, Yokosuka-shi Kanagawa 237-8585 (JP)
(74) Representative: Albrecht, Thomas

(57) **Abstract**

The present invention relates to a one-pack type adhesive precoating composition comprising (a) a mixture of at least two thermoplastic polymers having different softening points by not less than 30°C, each of which containing a carboxylic acid group or a carboxylic acid anhydride group, (b) a thermoplastic elastomer and (c) a tackifier, dispersed in an organic solvent, with the proviso that the composition does not comprise a latent curing agent.

## Description

### TECHNICAL FIELD

The present invention relates to a one-pack type adhesive precoating composition, more specifically, a one-pack type adhesive precoating composition comprising a mixture of at least two certain thermoplastic polymers having different softening points by a certain temperature, a thermoplastic elastomer and a tackifier, dispersed in an organic solvent. The adhesive precoating composition is, for example, useful as adhesives for precoating skin materials for car interior parts composed of suitable substrate layers and skin materials laminated on the substrate layers. In particular, the adhesive precoating composition is aimed at prolonging the shelf life of the adhesives, which is a period of time from applying the adhesives to skin materials, followed by drying, until bonding the resultant precoated skin materials to substrate layers, for example, by six months to two years.

### BACKGROUND OF THE INVENTION

For a high-class appearance, car interior parts have been composed of various substrate layers and various skin materials laminated on substrate layers. Recently, olefin materials have been increasingly used for both of substrate layers and skin materials in view of environmental protection.

Some one-pack type adhesives for precoating skin materials comprising (a) thermoplastic polymers containing carboxylic acid groups or carboxylic acid anhydride groups [particularly, olefin polymers such as polypropylenes, styrene-ethylene-butene-styrene copolymers (SEBS), etc.] and (b) polyamine compounds (e.g., hydrazide polyamine) as latent curing agents, dispersed in organic solvents, are proposed (see, for example, JP-A-2000-198940, pages 1-3, JP-A-2003-094524, pages 1-2).

### SUMMARY OF THE INVENTION

These adhesives are, however, gradually crosslinked even at a room temperature due to latent curing agents contained therein. Therefore, the shelf life of the adhesives, which is a period of time from applying the adhesives to skin materials, followed by drying, until bonding the resultant precoated skin materials to substrate layers, is too short. Therefore, the surfaces of the dried adhesives are often cured, for example, in three to four months, so that they are no longer able to act as adhesives.

As a result of intensive and extensive researches toward the solution of the above problems on the shelf life of the adhesives, the present inventors have found that one-pack type adhesive composition comprising (a) a mixture of at least two thermoplastic polymers having different softening points by a certain temperature, each of which containing a carboxylic acid group or a carboxylic acid anhydride group, (b) a thermoplastic elastomer and (c) a tackifier, dispersed in an organic solvent, but not comprising a latent curing agent, can achieve not only adhesive strength required for adhesives per se and suitable heat resistance, but also the desired prolonged shelf life, for example, by six months to two years. Thus, the present invention has been completed.

Accordingly, the present invention provides a one-pack type adhesive precoating composition comprising (a) a mixture of at least two thermoplastic polymers having different softening points by not less than 30°C, each of which containing a carboxylic acid group or a carboxylic acid anhydride group, (b) a thermoplastic elastomer and (c) a tackifier, dispersed in an organic solvent, with the proviso that the composition does not comprise a latent curing agent.

The one-pack type adhesive precoating composition according to the present invention is useful for precoating skin materials in the production of car interior parts, and has a prolonged shelf life, particularly six months to two years. Furthermore, the adhesive precoating composition has advantages in health and safety in manufacturing places because the amount of solvents remained in the adhesive layer can be further reduced by a suitable heat treatment.

### DETAILED DESCRIPTION OF THE PREFERRED EMBODIMENTS

The thermoplastic polymer containing a carboxylic acid group or a carboxylic acid anhydride group (hereinafter as referred to the "COOH-modified polymer") includes, for example, an olefin polymer, a butadiene polymer, an ester polymer, a carbonate polymer, a urethane polymer, an amide polymer and the like, each of which containing a carboxylic acid group or a carboxylic acid anhydride group. Examples of particularly preferred COOH-modified olefin polymers are those modified by introducing a dibasic acid (e.g., maleic acid, fumaric acid, citraconic acid, mesaconic acid, etc.) or an anhydride thereof, such as a COOH-modified polypropylene (PP), a COOH-modified propylene-1-butene-ethylene copolymer (PBE), a COOH-modified propylene-1-butene copolymer (PB), a COOH-modified styrene-ethylene-butene-styrene copolymer (SEBS), a COOH-modified ethylene-vinyl acetate copolymer (EVA), a COOH-modified ethylene-acrylate copolymer (EEA) and the like.
In the present invention, at least two polymers having different softening points by not less than 30°C are appropriately selected from these COOH-modified polymers, and used in a mixture thereof. When the difference of the softening points is less than 30°C, a temperature range capable of bonding the bodies to be bonded becomes narrower.
Among the COOH-modified polymer mixtures, most preferred is, for example, a mixture of two thermoplastic polymers (particularly, olefin polymers) having different softening points by not less than 30°C at a weight ratio of 1/9 to 9/1, preferably 7/3 to 3/7.

The thermoplastic elastomer to be used in the present invention includes, for example, a styrene butadiene copolymer, such as a styrene-butadiene copolymer, a styrene-acrylonitrile-butadiene copolymer, a styrene-butadiene-butylene-styrene copolymer, a styrene-ethylenebutylene-styrene copolymer, a styrene-butadiene-styrene copolymer or an acid-modified product thereof and/or a hydrogenated product thereof; an amorphous poly-α-olefin; an ethylene-vinyl acetate copolymer; other styrene copolymers, such as a styrene-isoprene copolymer, a styrene-isoprene-styrene copolymer, a styrene-ethylenepropylene-styrene copolymer, a styrene-ethylene-butene-styrene copolymer, a styrene-ethylene-ethylene-propylene-styrene copolymer; and the like. The amount of the thermoplastic elastomer to be used is generally in a range of 5 to 100 parts (parts by weight; hereinafter the same shall apply), preferably 10 to 50 parts, based on 100 parts of the above-mentioned COOH-modified polymer mixture. When the amount is less than 5 parts, a temperature range capable of bonding the bodies to be bonded tends to become narrower. When the amount exceeds 100 parts, the adhesive strength to a substrate layer tends to decrease.

The tackifier to be used in the present invention includes, for example, a rosin resin, a rosin acid ester, a petroleum resin, a coumarone-indene resin, a phenolic resin, a terpene phenolic resin, a xylene resin, and a hydrogenated product, a disproportionated product and a partially hydrogenated product thereof, and the like. The amount of the tackifier to be used is generally in a range of 50 to 150 parts, preferably 50 to 100 parts, based on 100 parts of the above-mentioned COOH-modified polymer mixture. When the amount is less than 50 parts, a temperature range capable of bonding the bodies to be bonded tends to become narrower. When the amount exceeds 150 parts, the adhesive strength to a substrate layer tends to decrease.

The one-pack type adhesive precoating composition according to the present invention comprises the COOH-modified polymer mixture (preferably at the above-mentioned weight ratio), the thermoplastic elastomer and the tackifier, dispersed in a suitable organic solvent (toluene, xylene, benzene, 1,1,1-trichloroethane, methylene chloride, cyclohexane, alkyl cyclohexanes, etc.), and optionally, common thermoplastic resins (acrylic resins, vinyl resins, polyamide resins, polyester resins, polyolefins, polyurethanes, SEBS), polyolefin close-contact adhesives, dyes and pigments, etc. in a suitable amount.

The precoated skin material according to the present invention can be obtained by applying the composition according to the present invention to various skin materials (e.g., a polyvinyl chloride foam, a polyolefin foam such as a polyethylene and a polypropylene) at 5 to 500 µm thickness, and then, drying the applied composition by heating at 80 to 120°C for 30 to 300 seconds. The resultant precoated skin material has not only a good adhesion to olefin materials which have low polarity and therefore are difficult to be adhered, but also a prolonged shelf life, for example, six months to two years.
Furthermore, it is advantageous for health and safety in manufacturing places of car interior parts to evaporate the solvents contained in the adhesive layer by heating at 165 to 200°C for 30 to 300 seconds, as described in detail below.

The process for producing a car interior part can be carried out with the above-mentioned precoated skin material by a vacuum molding method under heating according to the following procedures.
Firstly, a precoated skin material heated at 165 to 200°C for 30 to 300 seconds is laminated on various substrate layers (e.g., ABS boards, NOLYL (PPO) boards, ASG boards, polycarbonate boards, PP boards, wood composite boards, steel boards, etc.) which are maintained at a surface temperature of 25°C or more, preferably 45 to 90°C, and then, thermally compressed to each other under a pressure of 0.1 kg/cm² or more for 10 seconds or more to perform the molding and the adhesion at the same time.
Thus, car interior parts (car interior panels), for example, inside trims such as door trims, front pillars, rear pillars, deck side trims, center pillars; installment panels; molded headers; console boxes; and the like are obtained.

### [Examples]

The present invention will be illustrated in detail by the following examples and comparative examples.

### [Examples 1 to 8 and Comparative Examples 1 to 5]

### (1) Preparation of Adhesive

A COOH-modified polymer, a thermoplastic elastomer and a tackifier in the amounts in parts described in the following Table 1 were added to an organic solvent (xylene), and then, stirred and dispersed at 60°C for 2 hours to obtain an adhesive.

(2) Production and Adhesion Evaluation of Car Interior Panel
i) The adhesive obtained in the above (1) was applied at 40 µm dry thickness on a polypropylene foam skin material (thickness: 2 mm), and then, dried at 60°C for 5 minutes to obtain a precoated skin material.
ii) Next, the obtained precoated skin material was heated at 195°C for 2 minutes until the surface temperature was 140°C or 100°C, and laminated with maintaining the surface temperature onto a PP substrate having a surface temperature of 55°C or 35°C, which had been heated at 110°C for 45 seconds. Then, the laminate was compressed in a condition at 0.075 MPa for 20 seconds to obtain a car interior panel.

**Table 1**

| | Example | | | | | | | | Comparative example | | | | |
|---|---|---|---|---|---|---|---|---|---|---|---|---|---|
| | 1 | 2 | 3 | 4 | 5 | 6 | 7 | 8 | 1 | 2 | 3 | 4 | 5 |
| COOH-modified PBE * Softening point 90°C | 90 | 70 | 50 | 30 | 10 | 50 | 50 | 50 | 100 | - | 50 | 50 | 50 |
| COOH-modified PB * Softening point 120°C | 10 | 30 | 50 | 70 | 90 | 50 | 50 | 50 | - | 100 | - | 50 | 50 |
| COOH-modified PB* Softening point 100°C | - | - | - | - | - | - | - | - | - | - | 50 | - | - |
| ¹⁾ Thermoplastic elastomer 1 | 25 | 25 | 25 | 25 | 25 | 25 | - | - | 25 | 25 | 25 | 25 | 25 |
| ²⁾ Thermoplastic elastomer 2 | - | - | - | - | - | - | 25 | - | - | - | - | - | - |
| ³⁾ Thermoplastic elastomer 3 | - | - | - | - | - | - | - | 25 | - | - | - | - | - |
| ⁴⁾ Tackifier 1 | 25 | 25 | 25 | 25 | 25 | 100 | 25 | 25 | 25 | 25 | 25 | 25 | 25 |
| ⁵⁾ Tackifier 2 | 100 | 100 | 100 | 100 | 100 | 25 | 100 | 100 | 100 | 100 | 100 | 100 | 100 |
| ⁶⁾ Dodecanediohydrazide | - | - | - | - | - | - | - | - | - | - | - | 2 | 1 |
| Solvent (xylene) | 600 | 600 | 600 | 600 | 600 | 600 | 600 | 600 | 600 | 600 | 600 | 600 | 600 |

| | | | | | | | | | | | | | |
|---|---|---|---|---|---|---|---|---|---|---|---|---|---|
| Notes: 1) Hydrogenated styrene-butadiene copolymer 2) Styrene-isoprene copolymer 3) Partially hydrogenated styrene-butadiene-butylene-styrene copolymer 4) Aromatic petroleum resin "Nisseki Neo Polymer 170S" manufactured from Nippon Petrochemicals Co., Ltd. 5) Aromatic petroleum resin "Nisseki Neo Polymer 120" manufactured from Nippon Petrochemicals Co., Ltd. 6) "DDH" manufactured from Otsuka Chemical Co., Ltd. | | | | | | | | | | | | | |

iii) The peel strength and the heat resistant creep of the obtained car interior panel were measured according to the following conditions. The results are shown in Tables 2-1 and 2-2. In this regard, two kinds of the precoated skin materials, i.e., one just after preparing (initial) and one after leaving for 60 days at 40°C from the preparation, respectively, were used for producing a car interior panel, and evaluated.

### Peel Strength:

The peel strength (N/25 mm) was measured after curing the car interior panel at 20°C and 65% RH for 24 hours. FMB stands for material failure of the skin material, and BAF stands for interface failure from the substrate.

### Heat resistant creep:

The car interior panel was kept at 20°C for 24 hours. Then, a load of 100 g/25 mm was applied to the panel in the 90° angle direction in an atmosphere of 90°C. After 24 hours, the peeled length (mm) was measured.

**Table 2-1**

| | | | Example | | | | | | | |
|---|---|---|---|---|---|---|---|---|---|---|
| | | | 1 | 2 | 3 | 4 | 5 | 6 | 7 | 8 |
| Skin surface temp.: 140°C | Initial | Peel strength (N/25 mm) | 38 FMB100 | 35 FMB100 | 36 FMB100 | 36 FMB100 | 35 FMB80 BAF20 | 38 FMB100 | 31 FMB100 | 27 FMB100 |
| | | Heat resistant creep (mm) | 8 | 5 | 0 | 0 | 8 | 0 | 12 | 0 |
| Substrate surface temp.: 55°C | After leaving for 60 days at 40°C | Peel strength (N/25 mm) | 34 FMB100 | 38 FMB100 | 33 FMB100 | 36 FMB100 | 32 FMB80 BAF20 | 35 FMB100 | 35 FMB100 | 31 FMB100 |
| | | Heat resistant creep (mm) | 9 | 4 | 0 | 1 | 5 | 0 | 16 | 0 |
| Skin surface temp.: 100°C | Initial | Peel strength (N/25 mm) | 34 FMB100 | 39 FMB100 | 37 FMB80 BAF20 | 38 FMB80 BAF20 | 12 FMB20 BAF80 | 19 FMB40 BAF60 | 35 FMB100 | 13 BAF100 |
| | | Heat resistant creep (mm) | 6 | 4 | 0 | 3 | 18 | 15 | 15 | 15 |
| Substrate surface temp.: 35°C | After leaving for 60 days at 40°C | Peel strength (N/25 mm) | 35 FMB100 | 36 FMB100 | 38 FMB90 BAF10 | 31 FMB70 BAF30 | 11 FMB10 BAF90 | 15 FMB20 BAF80 | 32 FMB100 | 17 FMB10 BAF90 |
| | | Heat resistant creep (mm) | 8 | 3 | 0 | 1 | 18 | 13 | 16 | 14 |

**Table 2-2**

| | | | Comparative example | | | | |
|---|---|---|---|---|---|---|---|
| | | | 1 | 2 | 3 | 4 | 5 |
| Skin surface temp.: 140°C | Initial | Peel strength (N/25 mm) | 37 FMB100 | 24 FMB70 BAF30 | 32 FMB100 | 38 FMB100 | 37 FMB100 |
| | | Heat resistant creep (mm) | Fall | 12 | Fall | 0 | 2 |
| Substrate surface temp.: 55°C | After leaving for 60 days at 40°C | Peel strength (N/25 mm) | 40 FMB100 | 22 FMB50 BAF50 | 36 FMB100 | No adhesion | No adhesion |
| | | Heat resistant creep (mm) | Fall | 15 | Fall | No adhesion | No adhesion |
| Skin surface temp.: 100°C | Initial | Peel strength (N/25 mm) | 35 FMB100 | No adhesion | 36 FMB100 | 8 BAF100 | 13 BAF100 |
| | | Heat resistant creep (mm) | Fall | No adhesion | Fall | 4 | 5 |
| Substrate surface temp.: 35°C | After leaving for 60 days at 40°C | Peel strength (N/25 mm) | 32 FMB100 | No adhesion | 31 FMB100 | No adhesion | No adhesion |
| | | Heat resistant creep (mm) | Fall | No adhesion | Fall | No adhesion | No adhesion |

The present invention includes the followings:
[1] A one-pack type adhesive precoating composition comprising (a) a mixture of at least two thermoplastic polymers having different softening points by not less than 30°C, each of which containing a carboxylic acid group or a carboxylic acid anhydride group, (b) a thermoplastic elastomer and (c) a tackifier, dispersed in an organic solvent, with the proviso that the composition does not comprise a latent curing agent.
[2] The adhesive precoating composition according to the above-mentioned [1] comprising 5 to 100 parts by weight of the thermoplastic elastomer (b) and 50 to 150 parts by weight of the tackifier (c), based on 100 parts by weight of the thermoplastic polymer mixture (a).
[3] The adhesive precoating composition according to the above-mentioned [1] or [2], wherein the thermoplastic polymer mixture (a) is a mixture of two thermoplastic polymers having different softening points by not less than 30°C at a weight ratio of 1/9 to 9/1, each of which containing a carboxylic acid group or a carboxylic acid anhydride group.
[4] The adhesive precoating composition according to any one of the above-mentioned [1] to [3], wherein the thermoplastic elastomer (b) is a styrene-butadiene copolymer and/or a hydrogenated product thereof.
[5] A process for producing a precoated skin material comprising:
   (1) applying the one-pack type adhesive precoating composition according to any one of claims 1 to 4 to a skin material comprising a polyolefin foam for a car interior part, and
   (2) drying the applied composition.
[6] A precoated skin material obtained by the process according to the above-mentioned [5].
[7] A process for producing a car interior part comprising bonding the precoated skin material according to the above-mentioned [6] to a polyolefin substrate layer for a car interior part by a vacuum molding method under heating.
[8] A car interior part obtained by the process according to the above-mentioned [7].

## Claims

1. A one-pack type adhesive precoating composition comprising (a) a mixture of at least two thermoplastic polymers having different softening points by not less than 30°C, each of which containing a carboxylic acid group or a carboxylic acid anhydride group, (b) a thermoplastic elastomer and (c) a tackifier, dispersed in an organic solvent, with the proviso that the composition does not comprise a latent curing agent.

2. The adhesive precoating composition according to claim 1 comprising 5 to 100 parts by weight of the thermoplastic elastomer (b) and 50 to 150 parts by weight of the tackifier (c), based on 100 parts by weight of the thermoplastic polymer mixture (a).

3. The adhesive precoating composition according to claim 1, wherein the thermoplastic polymer mixture (a) is a mixture of two thermoplastic polymers having different softening points by not less than 30°C at a weight ratio of 1/9 to 9/1, each of which containing a carboxylic acid group or a carboxylic acid anhydride group.

4. The adhesive precoating composition according to claim 2, wherein the thermoplastic polymer mixture (a) is a mixture of two thermoplastic polymers having different softening points by not less than 30°C at a weight ratio of 1/9 to 9/1, each of which containing a carboxylic acid group or a carboxylic acid anhydride group.

5. The adhesive precoating composition according to claim 1, wherein the thermoplastic elastomer (b) is a styrene-butadiene copolymer and/or a hydrogenated product thereof.

6. The adhesive precoating composition according to claim 2, wherein the thermoplastic elastomer (b) is a styrene-butadiene copolymer and/or a hydrogenated product thereof.

7. The adhesive precoating composition according to claim 3, wherein the thermoplastic elastomer (b) is a styrene-butadiene copolymer and/or a hydrogenated product thereof.

8. The adhesive precoating composition according to claim 4, wherein the thermoplastic elastomer (b) is a styrene-butadiene copolymer and/or a hydrogenated product thereof.

9. A process for producing a precoated skin material comprising:
(1) applying the one-pack type adhesive precoating composition according to any one of claims 1 to 8 to a skin material comprising a polyolefin foam for a car interior part, and
(2) drying the applied composition.

10. A precoated skin material obtained by the process according to claim 9.

11. A process for producing a car interior part comprising bonding the precoated skin material according to claim 10 to a polyolefin substrate layer for a car interior part by a vacuum molding method under heating.

12. A car interior part obtained by the process according to claim 11.
